(19) Europäisches Patentamt
European Patent Office
Office européen des brevets

(11) **EP 3 061 563 A1**

(12) **EUROPEAN PATENT APPLICATION**
published in accordance with Art. 153(4) EPC

(43) Date of publication:
**31.08.2016 Bulletin 2016/35**

(51) Int Cl.:
**B23Q 15/14** (2006.01)  **B23C 3/00** (2006.01)

(21) Application number: **14847240.0**

(22) Date of filing: **25.09.2014**

(86) International application number:
**PCT/ES2014/070724**

(87) International publication number:
**WO 2015/044490 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.09.2013 ES 201331398**
**10.10.2013 ES 201331496**

(71) Applicant: **Fernandez Garcia, Jose Antonio**
**36202 Vigo (Pontevedra) (ES)**

(72) Inventor: **Fernandez Garcia, Jose Antonio**
**36202 Vigo (Pontevedra) (ES)**

(74) Representative: **Álvarez Flores, Alberto**
**Alvarez Real**
**Patentes y Marcas**
**Avda A Coruña, 39-43**
**27003 Lugo (ES)**

(54) **CUTTING METHOD, MACHINE AND TOOLS FOR CONTINUOUS MACHINING**

(57) The invention relates to a cutting method, machine and tools for the continuous machining of materials in machine-tools. The cutting tools with the capacity to orientate the tool with respect to the machining path are mounted in the machine-tool. The continuous machining is carried out with a single cutting edge selected and placed in position for machining. At any point during the machining, or when changing to another machining operation, the user can rapidly choose to place in position another of the cutting edges without having to change the tool. The calculation of the paths and rotations of the axes of the cutting tools is carried out by means of a piece of software external to the machine and sent to a numerical control machine (CNC) for the arrangement and control of the movements of the carriages and the rotations of the corresponding axes.

Fig. 5

**Description**

**OBJECT OF THE INVENTION**

The present invention relates to a method of machining metals and other materials in the milling machine, machining centers and other machine tools.
The present invention also relates to a machine tool that performs this operation, and in which cutting tools are mounted for the continuous cutting of metal shaving.
The present invention relates to a single cutting tool that has multiple teeth, each with one or more cutting edges attached to it. They are multi- positional edges. This means that the continuous machining is done with a single cutting edge, chosen and positioned for machining. If switching to another machining operation, you can choose another cutting edge quickly without changing the tool. Also, the present invention relates to the application to the any machine of the procedure which is the object of the present invention.
Finally, the present invention relates to a cutting tool that has a single tooth with one or two cutting edges; and to the application of this tool to the machine and procedure objects of the present invention.

**BACKGROUND OF THE INVENTION**

There are now a lot of types of machine tools for the machining of metals and other materials. Most of them are the combination and the evolution of two types of conventional machines, lathes and milling machines, into machines with computerized numerical control (CNC); the lathe with rotational movement of the workpiece and continuous cutting; and the milling machine, with rotational movement of the tool on the workpiece, and with discontinuous cutting. Another obsolescent machine is the planer, with reciprocating linear motion; In this machine tool, the backwards movement is unproductive, as it does not cut any material off.
In CNC machines the paths that the tool has to follow to achieve the desired geometry in the workpiece are programmed. The computer of the machine, together with the necessary electronics, manages the movements of the carriages (controlled axles) by means of electrical motors.
The tool paths may not be programmed in the CNC machine itself, but calculated by programs of computer-aided manufacturing (CAM), following a computer-aided design (CAD) of the workpiece and transferred to the CNC machine tool. Then, the electronic system (PCBs, PLCs, variable speed drives, power strips, encoders ...) will control the speed and acceleration of the engines to achieve the path calculated by the CAM and the desired geometry of the workpiece.
CNC has ISO functions G41, G42 and G43: tool radius compensation on left, tool radius compensation on right and tool length compensation. CNC and CAM take these G functions into consideration to calculate the path of the tool axis.
Currently the machining of prismatic pieces and complex surfaces is done by milling: rotating the cutting tool and with a workpiece-tool relative displacement; displacement in one, two, three or more axes/axles (Cartesian coordinate displacements and rotations of the workpiece / headstock).
The tool has one or multiple cutting edges and the machining is discontinuous. The rotation speed of the tool depends on its diameter and the cutting speed. And the cutting speed depends mainly on the materials of the tool and the workpiece. The speed of the displacement (feed, mm / min) is the product of feed per cutting edge (mm / z) number of teeth (Z) and rotation speed of the tool (rpm).
The performance of milling machines, with their discontinuous cutting, and, in general, of machines with rotating tools, is lower than the one of continuous cutting lathes. In the discontinuous cutting, each tooth of the tool cuts chip portions. The discontinuous chip cutting starts or ends with zero thickness, with the associated problems of stresses on the machine and the tool, deformation of the workpiece and tool and tool wear. The path of the cutting edges in the milling tool is approximately circular (cyclic curve) and tangent to the surface of the workpiece. For large or medium feeds, the surface quality is low.
Cutting speed and feed rate are described in machine tool treaties and guides. Feed rate is the relative lineal speed between the cutting tool and the workpiece. In the handbooks, we find the equation that determines the feed of the tool in terms of the variables that affect it:

```
Table feed or feed speed  Vf= fz*n*Zc   (mm/min)
```

Where:

n = Vc*1000/$\pi$*Dcap (revolutions of the tool)
fz = Feed per tooth (mm/fz)

Zc = number of effective teeth
Vc = Cutting speed (m/min)
Dcap = Cutting diameter at actual depth of cut ap (mm)

Thus, for example, for these typical values:

$$Az=0.1;\quad Zc=4;\quad D=14$$

Applying the above formulas,

$$Table\ feed\ or\ feed\ speed\ Vf \approx 9.1*Vc\ (mm/min)$$

Today there are countless types of cutting tools for machining metals and other materials. Most of them are the evolution of the classic tools of carbon steel forged by craftsmen. Cutting tools can be classified into two large groups according to the way you work: single cutting tools, used primarily in the planer and the lathe; and multiple-cutting rotary tools, used mainly in milling machining centers and lathes with power live tooling.

Currently it is not always easy to distinguish between a lathe and a milling machine. We find machines that combine the two ways of working; in any case, regardless of the machine, it is said that the workpiece is turned when it rotates and a cutting tool is moved cutting chip off it (continuous cutting). It is said that the workpiece is milled when the tool, with one or several cutting edges, is rotated around its axis and relative movement between this tool and the workpiece occurs.(discontinuous cutting)

Machine tools have currently multiple tools and we can program which to use. We can interchange them so as to address different machining operations. They are housed in the tool holder (lathe) and the tool store (machining centers). Tool changes, especially in milling, involve a significant waste of time. To change tools, the tool must be placed in the tool holder or tool store. Each tool occupies a one definite place in the tool holder. In milling and machining centers, the multiple edges of the tool are arranged so that the set of teeth or edges form a generatrix rotating around the axis of the working tool. The rotation of the tool cuts material off (shavings)

## DESCRIPTION OF THE INVENTION

The object of the present invention is a new machining process in machine tools.

The process object of the invention is the machining of surfaces by planing) continuously. The path of the cutting edge of the tool will be straight or curved, depending on the shape of the workpiece. The cutting edge will always be kept perpendicular to the path that takes, and may even be perpendicular to the machined surface if the machine has axles that can be regulated to position the tool.

For an easy interpretation, milling machining is taken as a reference and application, even if the machining procedure object of this invention may be applicable to other machines that work with rotary cutting tools, such as lathes with live tooling

In the present invention, the relative movement tool / workpiece is such that the cutting edge of the tool describes the paths needed for machining the workpiece. During the machining operation, the cutting edge of the tool is always in contact with the workpiece. CNC, together with the electronic system and the engines, manages the movement of the carriages (axles or axes) so that the edge follows the appropriate path to shape the piece and to remove the excess material. The edge of the tool is kept in contact with the workpiece, so that the chip is cut continuously.

The machining of simple geometries can be programmed in the CNC of the machine. G41, G42, and G43 CNC functions can be applied to calculate the paths of the tool center. For machining complex geometries, the tool paths are calculated with CAM and the coordinates of the points to which the tool will move are transmitted to the machine. In the machining process object of the present invention, CAM performs the calculation of the paths as it does for milling in conventional CNC. But CAM also calculates the rotation necessary to keep the tool constantly perpendicular to the path to be performed. In machines with five or more axes, it is contemplated that CAM performs the calculation of the rotations to give to one or more axles, in order to position the tool so that its edge is always perpendicular to the machined surface

When performing planing with a tool attached to the spindle of the milling machine, the spindle can be rotated and the planing tool will work as a rotary tool. The shift from planing to milling can be done at any time by the same CNC program as desired.

This invention is open to and can lead to the development of a great deal of different programmable machining strategies.

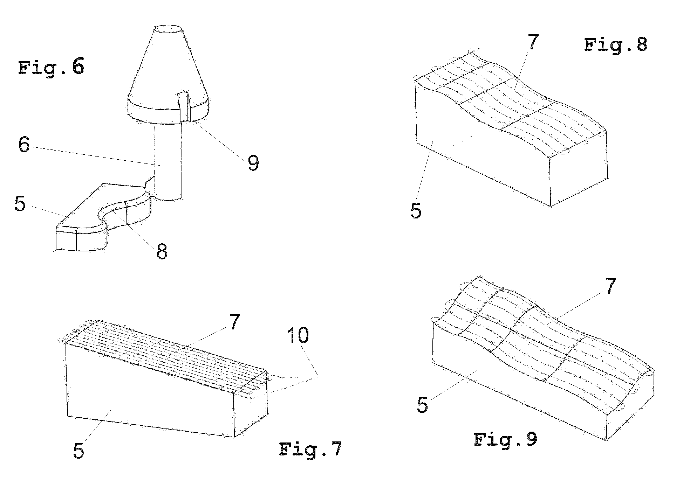

The simplest machining strategy would be the one needed for the performance of a chamfer or radius on a straight corner. The tool in this case will move along a straight path depending on the shape to be machined, and with a displacement speed -cutting speed (planning)/ feed(milling) - that depends on the workpiece material and the tool material. Furthermore, the corner to round or chamfer can be any line (Figure 6).That means that this procedure can be applied to any line, even if it is not a straight one.

Another strategy is zigzag machining a flat surface (Figure 7). The tool moves straight to the end of path.

At this point, the CNC commands a 180 degree rotation of the tool, and it starts moving back along a path displaced from the former the equivalent of the feed per tooth (Az) in conventional milling.(transversal feed)

In zig-zag machining, the tool must have two cutting edges. If the cutting edges are very close to the center of the tool (small cutting diameter and tool tip machining), tool radius compensation will not be necessary.

When the tool has a significant diameter CNC or CAM will work with tool radius compensation. Tool radius compensation on left (G41) or on right (G42) will change in every direction of the path.

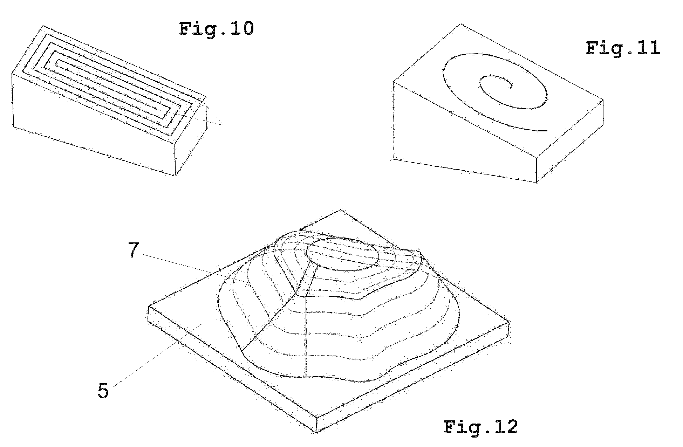

The same flat surface of above can be machined with a flat spiral curved path (Figures 10 and 11) (either inside out or outside-in). To do this, either CNC or CAM will calculate the path that the tool must describe (a spiral with an Az pitch) as well as the simultaneous rotation of the tool so that it is always perpendicular to its path and it strips shavings off continuously.

In 3D spiral machining, for each angle and radius (polar coordinate calculation) CAM will calculate the third coordinate on the surface of the workpiece. The calculation can be done in angular increments, and for each 360 °, in radius increments (circular path); or in increments of angle and radius simultaneously (spiral path).

Another machining strategy of the present invention is required for planing undulating surfaces (Figure 8). The calculation of the paths is preferably carried out with CAM. CAM calculates the intersection curves of separate parallel planes "Az" with the surface of the workpiece, to obtain the paths that the tool must follow on the planes. These calculated trajectories are sent to the CNC machine, which will control the necessary movements of the axles/axes movements.

An approach similar to the above is required for the machining of complex surfaces such those in Figures 9 and 12.

With the present invention the tool always keeps the cutting edge in contact with the workpiece. The tool edge always moves along the path to be machined, the cut is continuous, the displacement speed (milling feed) is much higher. All these factors improve the surface quality and reduce time greatly in light machining works or finishing jobs where the geometry of the workpiece and the tool allow the use of the present invention.

The cutting edge of the tool is in contact at all times with the workpiece, the cutting speed is the speed of the tool relative to the workpiece; cutting speed is expressed in m / min; the speed of the tool relative to the workpiece is the feed or feed rate. Thus:

```
Table feed or feed speed Vc =1000*Vc (mm/min)
```

We saw before that in the milling process, table feed or feed speed is approximately Vf ≈ 9.1*Vc (mm/min)

Thus, with the procedure of the present invention, for light load machining, and if the structure and engines of the machine make it possible, the machining feedrate is about a hundred (100) times the one in conventional milling.

To carry out the procedure of the present invention, the machine must have at least four controlled axes: the three coordinate axes/axles (X,Y,Z), and a spindle. This spindle controls the tool angular position. Thus, we will be able to make straight or circular paths, or any possible curved path. We will also be able to machine flat or undulating surfaces.

In machines with five or more controlled axes, in addition to the indispensable angular positioning of the tool, the planing of complex surfaces is made possible with a powerful mathematical application (used by CNC or CAM). In these machines, it is possible to position the tool perpendicular to the surface to be machined. Due to that, the surface quality is high and the machining is performed in a lot less time than with other methods.

In the present invention, as the cutting is continuous, a good surface finish can be obtained. For an optimum finish, the tool must always be perpendicular to the machined surface at the point of contact of its edge with the workpiece. With these premises, for the machining of the workpiece in Figure 9, apart from calculating the path of the tool edge and the angular orientation of the tool, CAM/CNC must calculate the rotations of the fourth and fifth axes so that the cutting edge of the tool is, at any time, perpendicular to the surface to be machined.

It is contemplated that with the procedure object of the present invention, many different strategies can be developed, such as 3D spiral planning or other.

It is also an object of the present invention a cutting tool in the milling machine for metal and other materials that strips off material continuously. At a given time, it uses a single cutting edge, but it has several edges that can be selected by programming the machine. Each tooth of the tool (with one or more edges) will have the appropriate angle depending on the material to be machined and the type of operation to perform on it. In order to carry out the method of the present invention (described above), the tool maintains the orientation relative to the surface of the workpiece, thus not varying its cutting angles during machining. The tool has two or more cutting teeth that may be at different heights and at different distances to the rotation axis. The cutting edges of these teeth can have different angles and / or chip breaker, corner radii, or other distinguishing characteristics. Therefore each tooth is different and with a specific use.

By means of software and the positional rotation of the machine spindle, which rotates the tool body, an edge is selected. Therefore the chosen edge behaves as a single cutting tool. Each tooth can have specific cutting characteristics and can do a different type of operation. Thus, for example a cutting edge will be used and have a geometry suitable for roughing and another for finishing. Or, for example, one can perform face milling whereas another is specific for grooving.

In the present invention, the body of the tool has several teeth (with their respective cutting edges) behaving as various single cutting tools that can be chosen depending on the operation. The change of a tooth for another is done by the rotation of the spindle of the machine, so the shift is instantaneous. Several cutting edges are built in the body of a single tool. Therefore, they occupy only one position in the tool post

This tool will preferably have an angular positioning element to be attached to the headstock or spindle of the machine tool. This angling element may be, for example, an HSK spindle, a WELDON or ISO cone or an equivalent part, which will ensure the spatial and angular position of the tool in relation to the spindle of the machine tool.

It is also an object of the present invention a basic neutral planing tool composed of a shank (101) attached to a body (104) which has a single tooth (120). This single tooth may present a single cutting edge (110), or two cutting edges (110 ', 110 "). The shaft (101) is anchored to an angular positioning element (103) that is clamped to the headstock or spindle of the machine tool.

In the case of the two cutting edges, a relief facet or junction radius (or both) is provided where they meet, to improve the resistance of the tool and the quality of the finish. The two edges meet on the tool axis. With the double cutting edge on a single tooth, you can work both to the right and to the left. This tool can perform planing; at the same time, when the spindle rotates, this tool rotates, too, in order to get the correct angular position.

If this basic tool has a single cutting edge, it will be centered on or very close to a plane that contains the rotating axis of the spindle or of the headstock of the machine. Thus, very low torques on the tool are achieved, and the machine headstock can be easily adjusted in a continuous way, so that the tool is always maintained perpendicular to the path to be machined, as described in the procedure object of the present invention. The tool is suitable for the execution of different cutting geometries in which, for example, very positive rake angles can be obtained.

Actually, the first tool object of the invention described above is a variant of the basic tool also object of the present invention. What makes the difference is that more teeth have been added to the body of the basic tool, with a single edge per tooth.

The angular positioning element (103) will allow continuous cutting (planing). The continuous rotation of the spindle allows us to have a rotary tool, too. With it, milling is also possible.

## A BRIEF DESCRIPTION OF THE DRAWINGS

Figure 1 represents the lathe machining of a workpiece with the current technique.

Figure 2 represents the milling machining of a piece following the current technique.

Figure 3 represents peripheral milling. The workpiece is contoured with a three toothed rotary tool in a conventional CNC milling operation

Figure 4 represents the peripheral milling (contouring) of a piece with a single edged cutting tool, according to the machining procedure object of the present invention.

Figure 5 depicts the peripheral milling(contouring) of a workpiece with a multiple edged cutting tool, following the machining procedure object of the present invention.

Figure 6. A representation of the rounding or chamfering of a curved corner of a workpiece with a single edged cutting tool, with a positioning element according to the machining process object of the present invention.

Figure 7 depicts the levelling of an inclined surface of a workpiece with a single edged cutting tool, according to the machining procedure object of the present invention.

Figure 8. A representation of how an undulating surface is manufactured with a single edged cutting tool , according to the procedure object of the present invention, and with a zig zag technique.

Figure 9 represents how a complex surface is manufactured with a single edged cutting tool, following the machining procedure object of the present invention.

Figure 10 depicts the machining of the surface of a workpiece with a single edged cutting tool, according to the machining procedure object of the present invention, with a square spiral technique.

Figure 11 represents the machining of a surface of a workpiece with a single edged cutting, following the process object of the present invention, with an Archimedean spiral technique.

Figure 12 depicts the machining of an uneven surface of a workpiece with a single edged cutting tool, according to the procedure object of the present invention, with a Z plane technique.

Figure 13. A cross sectional view of a tool object of the present invention. It has three teeth. The cutting edges are at different distances from the center, arranged irregularly and with different cutting angles. It is the cutting tool in figure 5.

Figure 14: a perspective view of the multitooth cutting tool in figures 13 and 5.

Figure 15: a perspective view of the basic cutting tool with a two edged tooth.

Figure 16: a perspective view of the basic cutting tool with a single edged tooth.

## A DETAILED EXPLANATION OF AN EMBODIMENT OF THE INVENTION

Next, we will describe the machining technique for a lathe, a milling machine and a multi edged (or multi-toothed) rotary cutting tool. The various ways of carrying out the procedure object of the present invention are also described. We will also describe various embodiments of the tools object of the present invention and applicable to the method and machine tool object of the present invention. This has to be understood in a broad, non limiting sense.

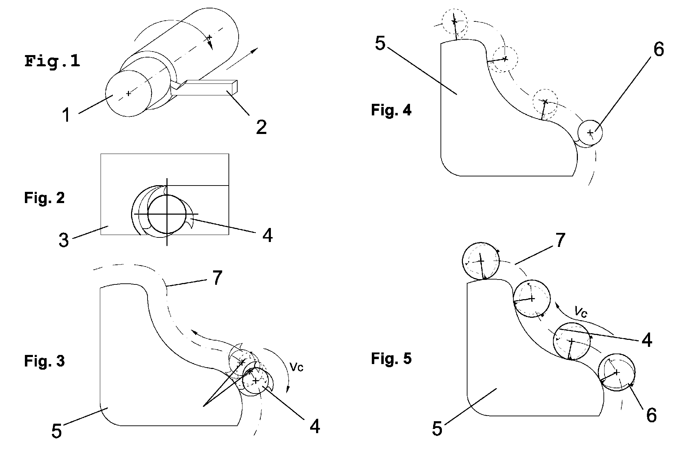

Figure 1 depicts the lathe machining of a piece according to the current technique. The workpiece (1) rotates and thus produces the cutting movement. The single edged cutting tool(2) moves with a speed called feed. This is a continuous cut machining technique.

Figure 2 represents the milling machining of a piece according to the current tecnique. A flat surface is machined on a prismatic workpiece (3). The rotary tool (4)produces a cutting movement; the machine provides a tool-workpiece relative displacement called feed. The tool removes portions of material by combining its rotation with that relative movement. As we can see in the figure, it is a discontinuous cut and the chips have variable thicknesses.

Figure 3 depicts a workpiece (5) contoured by the current (peripheral) milling technique with a three edged rotary tool (4). This is a conventional CNC milling opration. The rotation of the tool provides the cutting speed "Vc". CNC calculates and controls the carriages (axles) so that the tool axis describes the path necessary for machining the workpiece.

Technically speaking, the displacement speed of the tool is called feedrate. When the tool rotates, it produces a discontinuous cut. Each tooth strips off a portion of material and the tool movement equals feed per tooth "fz". With each rotation, the tool movement equals feed per rotation "fn", so

$$fn = fz * Zc$$

Table feed or feed speed is expressed in mm/min.

$$Table\ feed\ or\ feed\ speed\ \ Vf = fz * n * Zc\ \ (mm/min)$$

Figure 4 shows the contouring of a workpiece (5) with a single edged cutting tool (6) and using the machining technique object of the present invention. The tool center / cutting edge vector is always perpendicular to the path to be machined. CNC calculates the path that the center of the tool must describe (the dot and dash line in the figure line) and the rotation of the tool so that the cutting edge always follows that path. The electronic equipment makes the axles rotate with the required speed and acceleration. The cutting is continuous.

Figure 5 shows the contouring of a workpiece with a multiple edged cutting tool, according to the machining process object of the present invention, in which only one cutting edge is used. In figure 5, a tool (6) with three cutting edges contours the workpiece, but only uses one for continuous cut planing. CNC calculates the path of the center of the tool (6) and also its rotation, in order to keep the tool center- cutting edge vector always perpendicular to the path to be machined. The cutting movement is the one of the edge as it moves, and coincides with a milling feed.

In this Figure 5 we can see a tool with three asymmetrical cutting edges. The one we want to work with can be selected by programming the machine. The tool may have a cutting edge for roughing and other for finishing, for example. As shown in the figure, the machining feedrate (the standardized measurement units are mm/min) is equal to the cutting speed, (the standardized measurement units are m/min). Therefore, feed rate values can be very high.

$$\texttt{Table feed or feed speed \ Vf =1000*Vc(mm/min)}$$

Figure 6 depicts the rounding or chamfering of the curved corner of a workpiece with a single edged cutting tool, according to the process object of the present invention. A corner of a workpiece (5) with any geometry (8) is rounded/chamfered with the planing technique in the milling machine object of the present invention. The tool (6) has a cutting edge with the shape desired for the transition or meeting between the surfaces. The tool is driven so that the cutting edge is always perpendicular to the path to be machined. The tool has an element that makes possible its positioning (9) and precise rotation. The machine, by using motors and encoders, controls the rotation and positioning of the spindle where the tool is.

Figure 7 shows the planing of a flat inclined surface of a workpiece (5) with a single edged cutting tool, following the machining process object of the present invention, and with a zigzag strategy. The tool moves rapidly from a point (10) towards the workpiece and begins to perform the machining paths (7). At the end of each path, the tool rotates 180º and performs radius compensation, if necessary, to make a path in the opposite direction. The distance between paths equals feed per tooth in rotary tool milling.

Figure 8 shows how a surface of a workpiece is undulated with a planing opeation in a milling machine, using a single edged cutting tool, with the continuous cutting procedure which is object of the present invention, and with a zigzag strategy. CNC calculates and controls the movement of the tool on the curved paths (7); at the end of each path, the tool rotates 180º and performs radius compensation, if necessary, to make a path in the opposite direction. In the figure, the paths were calculated longitudinally, although they could be calculated transversely or in any other direction.

Figure 9 shows how any complex surface of a surface can be machined with a single edged cutting tool, following the machining procedure object of the present invention, and with a zigzag strategy. The planing in the milling machine of the complex surface is outlined here. (5) CAM calculates the intersections of parallel planes (the distance between them is equivalent to the sideways movement), with the surface to be machined, so as to get the complex curved paths (7); CNC manages the spindles so that the tool edge moves on the calculated paths. At the end of each path, the tool rotates 180º and performs radius compensation, if necessary, to make a path in the opposite direction.

Figure 10 shows the machining of a surface of a workpiece with a single edged cutting tool, performing the continuous cutting procedure object of the present invention, with a square spiral strategy.

In spiral paths, the radius compensation remains unchanged. This compensation is always on the right or on the left, as appropriate.

Figure 11 shows the machining of a surface of a workpiece with a single edged cutting tool, according to the procedure object of the present invention. An Archimedean spiral technique is outlined here. The Archimedean spiral will be flat if the surface to be machined is flat; or tridimensional if that surface is not flat.

Figure 12 represents the machining of an irregular surface of a workpiece with a single edged cutting tool, according to the process object of the present invention, with a Z plane strategy. In this figure, CAM cuts the surface to be machined in parallel horizontal planes; the intersection of the planes with the surface to be machined is equivalent to the contours (15); these contours calculated by CAM are paths that the tool edge will describe during the planing process in the milling machine. Such geometries as the one shown in the figure are typical of mould designs and mould machining.

The planing operation can be carried out by a four axis milling machine where the four axes* are controlled for machining 3D geometries. Three axes move the workpiece and a fourth axis rotates the tool so that the tool is always perpendicular to the path to be machined. Two axes, e.g. X and Y control the movement along the path on a plane or level; the change of level is performed by the third axis; the fourth axis positions the tool.

For a higher surface quality such geometries can be machined by machines with five or more axes. The advantage of having more controlled axes is that the tool edge, besides moving perpendicular to the path, is positioned perpendicular to the surface to be machined at the contact point.

It is contemplated that CAM/CNC can perform other path calculations by using different strategies, such as with planes at any angles; or varying in an even, uniform and constant way the distance of the intersection planes to the initial one. In figure 12, this would be something like a 3D spiral.

For complex surfaces, such strategies will likely require a machine with six controlled axes, three coordinate axes, two table/headstock tilt axes and an axis for controlling the angular position of the tool.

Thus, on a milling machine where CNC manages two or more axles/axes, the tool is positioned onto the workpiece so that the vector from the center of the tool to its cutting edge is perpendicular to the surface to be machined at the contact point. CNC acts on the axles/axes so that the relative movement workpiece-tool is at all times tangential to the machined surface.

The cut is continuous, similar to planing but without recoil. The paths can be on a plane or can be tridimensional. Either a CAM software or the Computerized Numerical Control (CNC)of the machine performs the necessary calculations to manage the movements of the axles/axes so that the tool edge path is tangent to the surface of the workpiece. At the same time, CNC calculates and controls the angle of the spindle, so that the tool will be correctly positioned, which means that the tool center cutting-edge vector is perpendicular to the machined path.

When a continuous cut is tangential to the workpiece, the feed (speed of the tool relative to the workpiece) is equal to the cutting speed characteristic of the tool and workpiece materials.

The speed of the tool relative to the workpiece is the machining feedrate. Because of the type of relative movement tool-piece, the feedrate (or simply "feed") is equal to the cutting speed "Vc".

```
Vc (m/min)
```

```
Table feed or feed speed  Vf = 1000*Vc (mm/min)
```

According to technical guides, we know that, in conventional milling, the revolutions "n" to program in the machine are:

```
n = Vc*1000/π*Dcap (revolutions of the tool)
```

In the same way as in milling:

```
Table feed or feed speed  Vf= fz*n*Zc  (mm/min)
```

Where:

fz = Feed per tooth (mm/fz)
Zc = number of effective teeth
Vc = Cutting speed (m/min)
Dcap = Cutting diameter at actual depth of cut ap (mm)

Let us assume that in a milling machine we have these typical values:

```
fz =0,1;  Zc =4;   D =14
```

Applying the above formulas: feed speed ≈9,1*Vc (mm/min)

For the above case, the machining feedrate with the present invention is approximately one hundred (100) times the feed in conventional milling with a rotating tool. In conventional milling, feed = 9.1 * Vc, versus feed = 1000 * Vc in planning.

Thus, with the method of the present invention, the surface quality is higher. You can get a dramatic reduction in machining times and cutting edge wear.

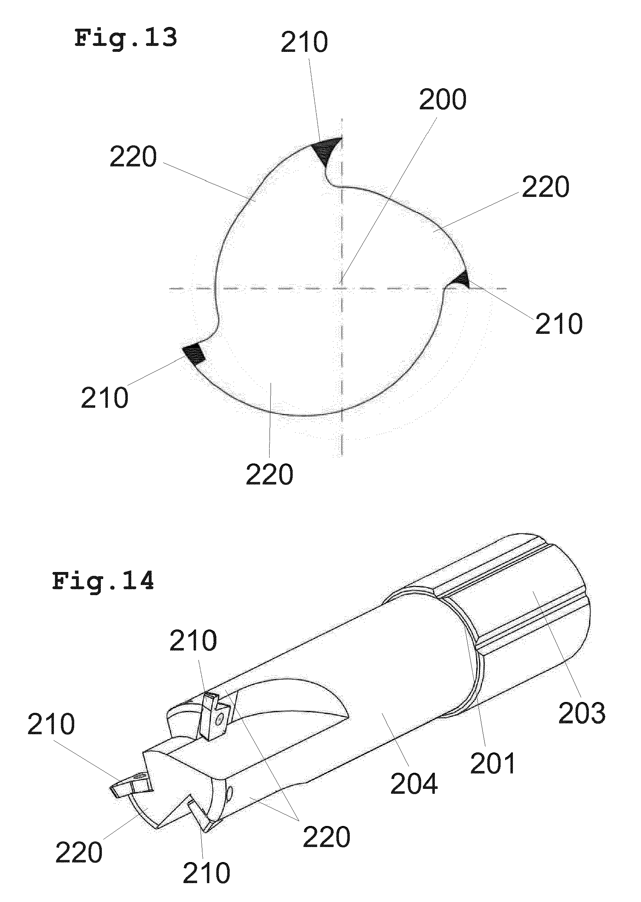

In Figures 13 and 14 we can see one of the cutting tools object of this invention. It consists of a shank (201) by which it is clamped to the machine spindle, a body (204) and teeth (220) with their cutting edges (210).

The shank (201) will preferably have an HSK spindle, a WELDON or ISO cone, or an equivalent part to ensure the angular position of the tool relative to the machine spindle. The tool body (204) is designed and manufactured for its specific type of machining, with a shape and measures that allow access to the area to be machined, and with the appropriate strength. The teeth (220) with their cutting edges (210) are at the end of the tool body. These will have different geometries, depending on their respective machining functions. Each edged tooth or tool edge will behave as a single edged cutting tool.

We can machine different materials and in different cutting conditions because the tool has teeth with different angles and geometries (chip breakers, nose radii, edges,...)
The edges can have different geometries. Therefore, different machining operations can be done with the same tool: contouring, boring, grooving, threading ... As the tool teeth (210) can be in different angular positions or at different distances from the axis(200), more machining operations can be selected without the other teeth interfering or obstructing the access of the tool to small parts of the workpiece.

The teeth of the tool may be carved in its body (220), welded or be fixed or interchangeable inserts (as in Figure 14).

The tool teeth (210) are in a defined angular position relative to the shank to which they are attached(201), so that CNC can select one tooth by rotating the spindle into the correct position.

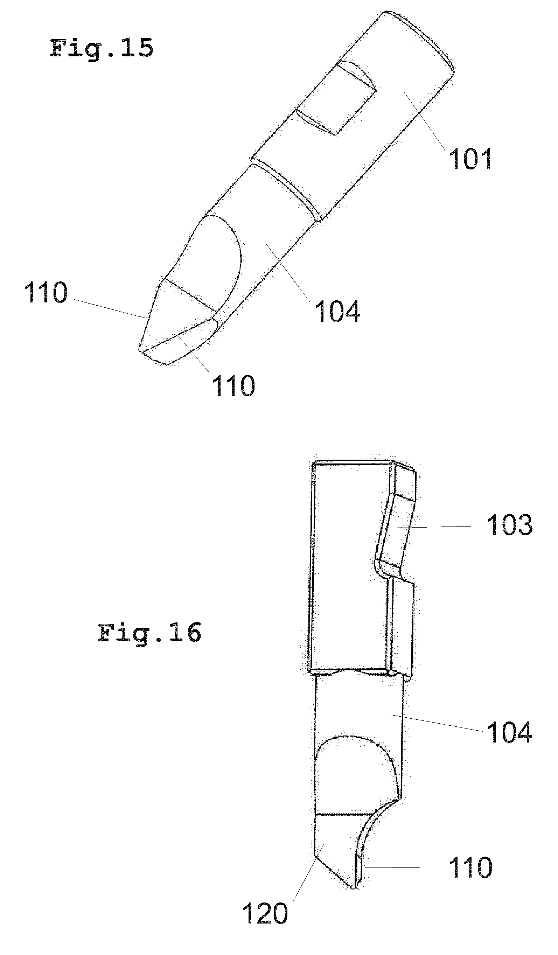

Figures 15 and 16 depict the basic neutral planing tool. It is composed of a shank (101) attached to a body(104) and with a single tooth (120). This tooth may have a single cutting edge (110)(figure 16) or two cutting edges (110', 110'') (Figure 15). Both the shank (101) and the spindle/headstock will have elements that match each other to position the tool at the right angle. The angular positioning element (103) may be an HSK spindle, an ISO or WELDON cone or an equivalent part. The choice will depend on the technique used, and will ensure the spatial and angular position of the tool relative to the spindle of the machine tool. The tool body (104) is designed and manufactured depending on the type of machining, with a shape and dimensions that allow an easy access to the area to be machined. It must be strong enough for the operations it will carry out.

**Claims**

1. A milling and planing procedure in the milling machine for metals and other materials, **characterized by** the fact that a software calculates the paths that a tool must follow for CNC machining, and how much to rotate this tool in the headstock, the machine manages the movements, speeds and accelerations of the axes/axles/spindles, so that the tool cutting edge(110,210) is in continuous contact with the workpiece to be machined, on the calculated path, with the cutting edge-tool center vector at all times perpendicular to that path.

2. A milling and planing procedure for metals and other materials, according to the previous claim, **characterized in that** the machining is performed in any machine tool capable of positioning the tool in relation to the path to be machined.

3. A milling and planing procedure for metals and other materials, according to any of the preceding claims, **characterized in that** the calculation of paths and rotations of axes is performed by a CAM software external to the machine, the toolpaths, the rotation of the tool for its positioning on the path and the rotations of the axes to keep the tool perpendicular to the surface to be machined are sent to the CNC machine, so that it can manage and control the movement of the carriages and the rotations of the corresponding axles.

4. A milling and planing procedure for metals and other materials, according to any of the preceding claims, **characterized in that** CAM or CNC can change the machine function from planing into milling and viceversa at any time, even while one of the machining paths is being made.

5. A single edged cutting tool for a machine tool, its function is executing the procedure of any of the preceding claims, it belongs to the type comprising a shank (101, 201) attached to a body (104,204), said body has at least one tooth (120,220), said tooth has at least one cutting edge (110', 210), the tool is **characterized in that** the shank (101,201) is fixed to the spindle of the machine tool by means of an angular positioning element (103).

6. A single edged cutting tool according to the preceding claim, **characterized in that** its body (204) comprises at least two teeth (220) each tooth has a specific cutting edge (210) Edge choice is programmable by rotating the tool to position the cutting edge (210), automatically and continuously, perpendicular to the path to be machined.

7. A single edged cutting tool according to the preceding claim, **characterized in that** the cutting edges (210) are inserts, fixed or interchangeable, mechanically attached to the tool body.

**8.** A single edged cutting tool according to any one of claims 6 to 7, **characterized in that** the cutting edges (210) are located at different distances from the axis (200) of the body (204).

**9.** A single edged cutting tool according to any one of the claims 6 to 8, **characterized in that** the cutting edges (210) are located in asymmetric angular positions relative to the axis (200) of the body (204).

**10.** A single edged cutting tool according to any one of claims 6 to 9, **characterized in that** the teeth (220) have different cutting geometries (chip breakers, nose radii, edges,...).

**11.** A single edged cutting tool, according to any one of claims 6 to 10, **characterized in that** the edges (210) have different cutting angles.

**12.** A single edged cutting tool, according to claim 5, **characterized in that** the body (104) comprises a single tooth (120) with a double right and left cutting edge (110); and **in that** the confluence of the two cutting edges lie on the rotation axis of the tool (200), or very close to it.

**13.** A single edged cutting tool according to claim 5, **characterized by** having a single tooth (120) with a single cutting edge (110), it can machine and rotate simultaneously when the spindle where it is housed rotates it is also **characterized in that** the cutting edge (110) is located on a plane containing the tool rotating axis (200), or very close to it; and **in that** its apex is on the rotation axis (200) or very close to it.

**14.** A machine tool for performing the procedure exposed in the previous claims and incorporating any of the cutting tools mentioned in them.
teeth interfering or obstructing the access of the tool to small parts of the workpiece.
The teeth of the tool may be carved in its body (220), welded or be fixed or interchangeable inserts (as in Figure 14). The tool teeth (210) are in a defined angular position relative to the shank to which they are attached(201), so that CNC can select one tooth by rotating the spindle into the correct position.
Figures 15 and 16 depict the basic neutral planing tool. It is composed of a shank (101) attached to a body(104) and with a single tooth (120). This tooth may have a single cutting edge (110)(figure 16) or two cutting edges (110', 110'') (Figure 15). Both the shank (101) and the spindle/headstock will have elements that match each other to position the tool at the right angle. The angular positioning element (103) may be an HSK spindle, an ISO or WELDON cone or an equivalent part. The choice will depend on the technique used, and will ensure the spatial and angular position of the tool relative to the spindle of the machine tool. The tool body (104) is designed and manufactured depending on the type of machining, with a shape and dimensions that allow an easy access to the area to be machined. It must be strong enough for the operations it will carry out.

**1.** A milling and planing procedure in the milling machine for metals and other materials, **characterized by** the fact that a software calculates the paths that a tool must follow for CNC machining, and how much to rotate this tool in the headstock. The machine manages the movements, speeds and accelerations of the axes/axles/spindles , so that the tool cutting edge(110,210) is in continuous contact with the workpiece to be machined, on the calculated path, with the cutting edge-tool center vector at all times perpendicular to that path.

**2.** A milling and planing procedure for metals and other materials, according to the previous claim, **characterized in that** the machining is performed in any machine tool capable of positioning the tool in relation to the path to be machined.

**3.** A milling and planing procedure for metals and other materials, according to any of the preceding claims, **characterized in that** the calculation of paths and rotations of axes is performed by a CAM software external to the machine.The toolpaths, the rotation of the tool for its positioning on the path and the rotations of the axes to keep the tool perpendicular to the surface to be machined are sent to the CNC machine, so that it can manage and control the movement of the carriages and the rotations of the corresponding axles.

**4.** A milling and planing procedure for metals and other materials, according to any of the preceding claims, **characterized in that** CAM or CNC can change the machine function from planing into milling and viceversa at any time, even while one of the machining paths is being made.

**5.** A single edged cutting tool for a machine tool. Its function is executing the procedure of any of the preceding claims. It belongs to the type comprising a shank (101, 201) attached to a body (104,204). Said body has at least one tooth (120,220). Said tooth has at least one cutting edge (110', 210). The tool is **characterized in that** the shank (101,201) is fixed to the spindle of the machine tool by means of an angular positioning element (103).

**6.** A single edged cutting tool according to the preceding claim, **characterized in that** its body (204) comprises at least two teeth (220). Each tooth has a specific cutting edge (210) Edge choice is programmable by rotating the tool to position the cutting edge (210), automatically and continuously, perpendicular to the path to be machined.

**7.** A single edged cutting tool according to the preceding claim, **characterized in that** the cutting edges (210) are inserts, fixed or interchangeable, mechanically attached to the tool body.

**8.** A single edged cutting tool according to any one of claims 6 to 7, **characterized in that** the cutting edges (210) are located at different distances from the axis (200) of the body (204).

**9.** A single edged cutting tool according to any one of the claims 6 to 8, **characterized in that** the cutting edges (210) are located in asymmetric angular positions relative to the axis (200) of the body (204).

**10.** A single edged cutting tool according to any one of claims 6 to 9, **characterized in that** the teeth (220) have different cutting geometries (chip breakers, nose radii, edges,...).

**11.** A single edged cutting tool, according to any one of claims 6 to 10, **characterized in that** the edges (210) have different cutting angles.

**12.** A single edged cutting tool, according to claim 5, **characterized in that** the body (104) comprises a single tooth (120) with a double right and left cutting edge (110); and **in that** the confluence of the two cutting edges lie on the rotation axis of the tool (200), or very close to it.

**13.** A single edged cutting tool according to claim 5, **characterized by** having a single tooth (120) with a single cutting edge (110). It can machine and rotate simultaneously when the spindle where it is housed rotates. Is is also **characterized in that** the cutting edge (110) is located on a plane containing the tool rotating axis (200), or very close to it; and **in that** its apex is on the rotation axis (200) or very close to it.

**14.** A machine tool for performing the procedure exposed in the previous claims and incorporating any of the cutting tools mentioned in them.

**15.** A machining procedure, according to any of the claims 1 to 4, on a flat surface, with the machine tool mentioned in claim 14, **characterized in that** said tool moves straight to the end of the path. Next, CNC commands tho tool to turn 180 degrees. And after that, another return path starts, diverted from the former a distance equal to feed per tooth (Az) in conventional milling.

**16.** A machining procedure, according to claim 15, **characterized in that** the tool describes a flat spiral curved path, with a spiral pitch equal to feed per tooth (Az), with a simultaneous rotation to keep the tool always perpendicular to the path and to make it strip chip in a continuous cutting.

**17.** A machining procedure, according to any of the claims 1 to 4, on a tridimensional surface, with the machine in claim 14. It is **characterized in that** CAM/CNC calculates, for each angle and radius, the third coordinate on the tridimensional surface of the workpiece, being the resulting path a circular or spiral one.

**18.** A planing procedure, according to any of the claims 1 to 4, on a tridimensional surface of a workpiece, with the machine in claim 14. It is **characterized in that** CAM/CNC calculates the intersection curves of parallel planes separated from the surface of the workpiece by the equivalent of the sideways displacement / feed per tooth (Az), thus obtaining the paths that must be performed on the planes. The data of these paths are sent to the CNC machine to manage the necessary movements of the controlled axles/axes and the angular positioning of the tool.

**Fig.1**

1

2

**Fig. 2**

3

4

**Fig. 4**

5

6

**Fig. 3**

7

5

4

Vc

**Fig. 5**

5

7

4

6

Vc

Fig.6

6

5

9

8

Fig.8

7

5

Fig.7

7

10

5

Fig.9

7

5

Fig.10

Fig.11

Fig.12

**Fig.13**

**Fig.14**

Fig.15

110

110

104

101

Fig.16

103

104

110

120

## INTERNATIONAL SEARCH REPORT

| International application No. |
|---|
| PCT/ES2014/070724 |

### A. CLASSIFICATION OF SUBJECT MATTER

*B23Q15/14* (2006.01)
*B23C3/00* (2006.01)
According to International Patent Classification (IPC) or to both national classification and IPC

### B. FIELDS SEARCHED

Minimum documentation searched (classification system followed by classification symbols)
**B23Q, B23C**

Documentation searched other than minimum documentation to the extent that such documents are included in the fields searched

Electronic data base consulted during the international search (name of data base and, where practicable, search terms used)

EPODOC

### C. DOCUMENTS CONSIDERED TO BE RELEVANT

| Category* | Citation of document, with indication, where appropriate, of the relevant passages | Relevant to claim No. |
|---|---|---|
| X | CA 2356945 A1 (RODERS JURGEN) 24/08/2000, the whole the document. | 1-4,14 |
| Y | | 5-13 |
| Y | ES 2267375 A1 (DI BENEDETTO LEONARDO LUIS) 01/03/2007, column 2, lines 22 - 24; lines 40 - 46; column 4, lines 9 - 16; figure 4. | 5-13 |
| X | JP S63123603 A (MITSUBISHI HEAVY IND LTD) 27/05/1988, abstract; figures 1-4. | 1,2,14 |
| A | | 5-13 |
| A | EP 1162018 A1 (OTKRYTOE AKTSIONERNOE OBSCHEST) 12/12/2001, the whole document. | 1-14 |
| A | US 2010111632 A1 (TINGLEY III WILLIAM Q ET AL.) 06/05/2010, the whole document. | 1-14 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 18/12/2014 | **(18/12/2014)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | A. Andreu Cordero |
| | Telephone No. 91 3493055 |

Form PCT/ISA/210 (second sheet) (July 2009)

**INTERNATIONAL SEARCH REPORT**

Information on patent family members

| International application No. |
|---|
| PCT/ES2014/070724 |

| Patent document cited<br>in the search report | Publication<br>date | Patent family<br>member(s) | Publication<br>date |
|---|---|---|---|
| CA2356945 A1 | 24.08.2000 | WO0048786 A1<br>EP1073540 A1<br>DE19906858 A1 | 24.08.2000<br>07.02.2001<br>31.08.2000 |
| ES2267375 A1 | 01.03.2007 | MX2007011276 A<br>US2009234491 A1<br>US7854068 B2<br>JP2008532812 A<br>WO2006097560 A1<br>WO2006097560 A8<br>EP1864735 A1<br>EP1864735 A4<br>CN101175594 A<br>CA2601055 A1<br>CA2601055 C<br>BRPI0609137 A2 | 08.11.2007<br>17.09.2009<br>21.12.2010<br>21.08.2008<br>21.09.2006<br>13.12.2007<br>12.12.2007<br>11.07.2012<br>07.05.2008<br>21.09.2006<br>16.10.2012<br>23.02.2010 |
| JPS63123603 A | 27.05.1988 | JPH089124B B2 | 31.01.1996 |
| EP1162018 A1 | 12.12.2001 | WO0143907 A1<br>JP2003516869 A<br>RU2153958 C1 | 21.06.2001<br>20.05.2003<br>10.08.2000 |
| US2010111632 A1 | 06.05.2010 | US2014079502 A1<br>US8821086 B2<br>US2010119321 A1<br>WO2008079151 A1<br>CA2710500 A1 | 20.03.2014<br>02.09.2014<br>13.05.2010<br>03.07.2008<br>03.07.2008 |

Form PCT/ISA/210 (patent family annex) (July 2009)